# EUROPEAN PATENT APPLICATION

(11) **EP 3 511 888 A1**
(43) Date of publication of application: **17.07.2019**
(21) Application number: 18209006.8
(22) Date of filing: 28.11.2018
(51) Int. Cl.: G06Q 20/02, G06Q 20/10, G06Q 20/38

(54) **METHOD AND SYSTEM FOR PROCESSING A CROSS-BORDER PAYMENT**

(30) Priority: 15.01.2018 SG 10201800329Q
(71) Applicant: Mastercard International Incorporated, Purchase NY 10577 (US)
(72) Inventor: SRINIVASAN, Haribabu, Aylesbury, Buckinghamshire HP18 0YF (GB); PAREEK, Ravi, 411014 Maharashtra (IN); AGARWALLA, Sachin Kumar, 411014 Maharashtra (IN); PARMAR, Twinkle Mahendra, 444001 Akola (IN); CHANDRASEKARAN, Vasudevan, London, E6 2LT (GB)
(74) Representative: Fountain, Sullivan

(57) **Abstract**

A method for processing a cross-border payment includes receiving inbound payment data from a first financial institution located in a first country. The inbound payment data is in a first message format. The method further includes generating a payment request based on the inbound payment data such that the payment request is in the second message format, and processing the generated payment request. Processing comprises approving or declining the payment request. If the payment request is approved, the method further includes generating outbound payment data such that the outbound payment data is in the first message format, and sending the outbound payment data to a second financial institution located in a second country. A system for processing a cross-border payment is also provided.

## Description

### FIELD OF INVENTION

The present invention relates broadly, but not exclusively, to methods and systems for processing a cross-border payment.

### BACKGROUND

Globalization and international commerce have led to large numbers of cross-border transactions being performed every day. Non-limiting examples of such cross-border transactions include payments for purchases of goods or services, fund transfers between individuals and/or enterprises, etc. Some cross-border payments may be made by the payer in first currency and disbursed to the payee in a second currency.

Cross-border payments usually involve multiple correspondent banks or financial institutions, resulting in a lead-time (i.e. duration from the time a payment is initiated to the time the payment is actually received) of up to 3-8 days. It has been noted that about 3-5 intermediaries located at various locations may be involved in a transaction. Fees and foreign exchange mark-ups and processing time are involved for each party in the credit chain. In some cases, it is estimated that the total fees may be up to 5% of the transaction amount. Typically, there are no means of tracking payments. Furthermore, the various countries involved in a transaction may have holiday on different days, thus causing delays.

A need therefore exists to provide methods and/or systems that seek to address at least some of the above problems.

### SUMMARY

An aspect of the present disclosure provides a method for processing a cross-border payment. The method comprises receiving inbound payment data from a first financial institution located in a first country, wherein the inbound payment data is in a first message format; generating a payment request based on the inbound payment data such that the payment request is in the second message format; processing the generated payment request, wherein processing comprises approving or declining the payment request. If the payment request is approved, the method further includes generating outbound payment data such that the outbound payment data is in the first message format; and sending the outbound payment data to a second financial institution located in a second country.

A second aspect of the present disclosure provides a system for processing a cross-border payment. The system comprises a first gateway, a payment processor and a second gateway. The first gateway is configured to receive inbound payment data in a first message format from a first financial institution located in a first country and to generate a payment request based on the inbound payment data such that the payment request is in the second message format. The payment processor is connected to the first gateway over a network and configured to process the generated payment request. Processing comprises approving or declining the payment request. The second gateway is connected to the payment processor over the network and is configured to, if the payment request is approved, generate outbound payment data such that the outbound payment data is in the first message format and send the outbound payment data to a second financial institution located in a second country.

A third aspect of the present disclosure provides a system for processing a cross-border payment. The system comprises a processor; and a memory unit communicatively coupled to the processor. The memory unit is configured to store inbound payment data received from a first financial institution located in a first country, wherein the inbound payment data is in a first message format. The processor is configured to generate a payment request based on the inbound payment data such that the payment request is in the second message format; process the generated payment request, wherein processing comprises approving or declining the payment request. If the payment request is approved, the processor is further configured to generate outbound payment data such that the outbound payment data is in the first message format; and send the outbound payment data to a second financial institution located in a second country.

### BRIEF DESCRIPTION OF THE DRAWINGS

Embodiments of the invention will be better understood and readily apparent to one of ordinary skill in the art from the following written description, by way of example only, and in conjunction with the drawings, in which:
Figure 1 shows a flow chart illustrating a method for processing a cross-border payment according to an example embodiment.
Figure 2 shows a schematic diagram illustrating a system for processing a cross-border payment according to an example embodiment.
Figure 3 shows an abbreviated pacs.008 message in a first message format according to an example embodiment.
Figure 4 shows example data fields of inbound payment data that have been converted into a data interchange format according to an example embodiment.
Figure 5 shows an example 0200 message associated with the payment request in the second message format according to an example embodiment.
Figure 6 shows a schematic diagram illustrating a gateway suitable for use in the system of Figure 2 according to an example embodiment.
Figure 7 shows a schematic diagram of a computer system suitable for implementing the methods and systems of the example embodiments.

### DETAILED DESCRIPTION

### Overview

Various embodiments provide methods and systems for processing a cross-border payment.

A cross-border payment, in most instances, is processed as an inter-bank transaction. However, because of the cross-border nature, e.g. difference in currency, difference in clearing rules, etc., a direct transaction between the sending bank (or financial institution) and the receiving bank (or financial institution) is usually not possible. A payment card network, e.g. Mastercard®, that acts as facilitator for electronic transactions, on the other hand, has direct correspondent relationships with banks in most countries. The payment card network can therefore become the single intermediary to help to arrange the cross-border payment.

According to various embodiments, methods and systems are provided to interpret payment data that are normally sent by banks during inter-bank transactions and convert such data to a format that can be processed by the payment card network.

Hence, the banks can continue to perform the transactions in a normal manner, with no change or minimal change to the interface. At the back end, the payment data are routed to systems managed by the payment card network, where the data are converted from one format to another such that the payment can be processed by the payment card network.

Advantageously, with the methods and systems as disclosed herein, the number of intermediaries can be reduced. As a result, cross-border payments can be processed relatively faster and at lower cost compared to traditional approaches.

### Terms Description (in Addition to Plain and Dictionary Meaning of Terms)

Payment can broadly mean a transfer of value, e.g. money or credit, from a payer to a payee, usually via their respective accounts. For example, when a payer effects a payment of $1000 to a payee, an equivalent amount (taking into account foreign exchange and processing fees) is debited from the payer's account with a bank or financial institution and credited to the payee's account with a bank or financial institution. In some circumstances, a processing fee may also be applied to the payee.

Cross-border means between different countries.

A financial institution means an organization or establishment that conducts financial transactions. Non-limiting examples of a financial institution include a bank, a credit union, a cooperative, an association, a brokerage.

An application programming interface is a prescribed specification to assist with the development of software or interaction with an external system.

Inbound payment data are data associated with a payment that are transmitted from a financial institution associated with the payer to a service provider that helps to process the payment. Outbound payment data are data associated with a payment that are transmitted from the service provider to a financial institution associated with the payee.

The inbound and outbound payment data are typically organized in a first message format. The first message format is used by financial institutions in interbank communication, and may be compatible with SWIFT or ACH. For example, the first message format is based on ISO 20022.

A payment request means instruction to a payment processor, such as one by managed by Mastercard®, to process an electronic transaction.

The payment request is typically organized in a second message format. The second message format is used by payment card networks (such as Mastercard®), also known as payment facilitators, in electronic payment processing. For example, the second message format may be based on ISO 8583.

### Exemplary Embodiments

Embodiments will be described, by way of example only, with reference to the drawings. Like reference numerals and characters in the drawings refer to like elements or equivalents.

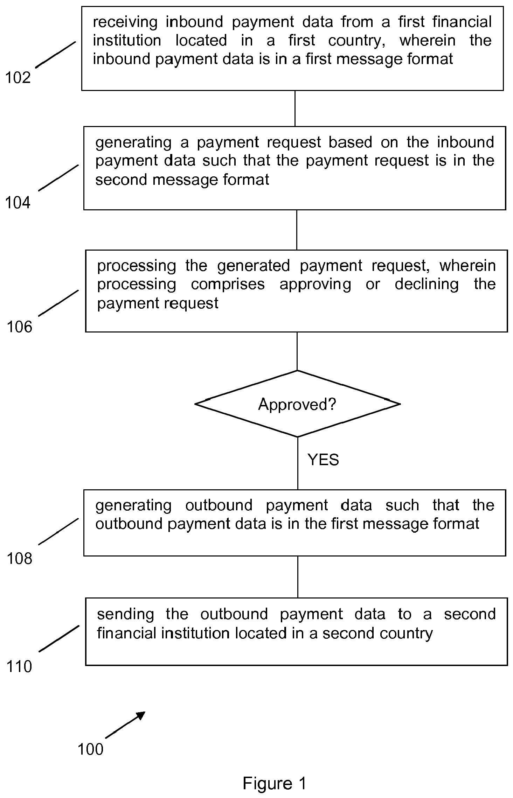

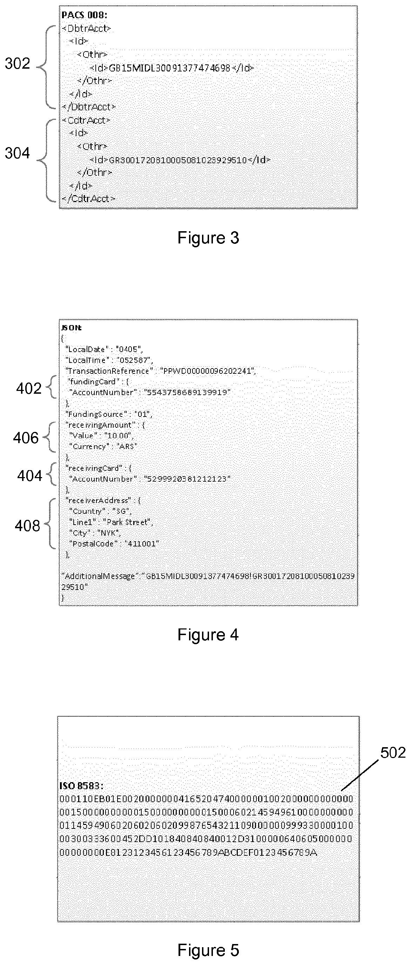

Figure 1 shows a flow chart 100 illustrating a method for processing a cross-border payment according to an example embodiment. For example, a payer in a first country, through a first financial institution, would like to make a payment to a payee who has an account at a second financial institution in a second country. The present method helps to arrange for the payment by processing the payment data between the first financial institution and second financial institution. At step 102, inbound payment data is received from the first financial institution located in the first country by a server, e.g. one managed by a payment card network such as Mastercard®. The inbound payment data may be created from the details provided by the payer and is in a first message format (as described in detail in Figure 3. At step 104, a payment request is generated by the server based on the inbound payment data such that the payment request is in the second message format. At step 106, the generated payment request is processed by the payment card network. Processing comprises approving or declining the payment request. If the payment request is approved, at step 108, outbound payment data is generated such that the outbound payment data is in the first message format. At step 110, the outbound payment data is sent from the server to a second financial institution located in a second country. The second financial institution can then effect the payment to the payee, as described in further detail below.

According to various embodiments, generating the payment request from the inbound payment data at step 104 includes converting the inbound payment data from the first message format to a data interchange format accessible by an application programming interface (API). An example of the API is the Mastercard® MoneySend API, and an example of the data interchange format is JavaScript Object Notation (JSON). The API then identifies data in predetermined fields to generate the payment request in the second message format.

In a non-limiting example, converting the inbound payment data from the first message format to the data interchange format further includes converting an account number associated with the first financial institution to a sender card account number, and converting an account number associated with the second financial institution to receiver card account number.

According to various embodiments, the method further includes receiving payment confirmation data from the second financial institution and transmitting the payment confirmation data to the first financial institution. The payment confirmation data is in the first message format. Transmitting includes converting the payment confirmation data from the first message format to the second message format for receipt by the API and converting the payment confirmation data from the second message format to the first message format for transmission to the first financial institution.

According to various embodiments, processing the payment request at step 106 includes Single Message processing. In other words, authorization, clearing and settlement of the payment request is performed in one step.

According to various embodiments, sending the outbound payment data to the second financial institution at step 110 includes determining whether the second financial institution is configured to receive the outbound payment data directly. If the second financial institution can receive the outbound payment data directly, the outbound payment data is sent to the second financial institution.

On the other hand, if the second financial institution cannot receive the outbound payment data directly, the outbound payment data is sent to a third financial institution in the second country for onward settlement with the second financial institution.

According to one embodiment, the first message format is compliant with ISO 20022, and the second message format is compliant with ISO 8583.

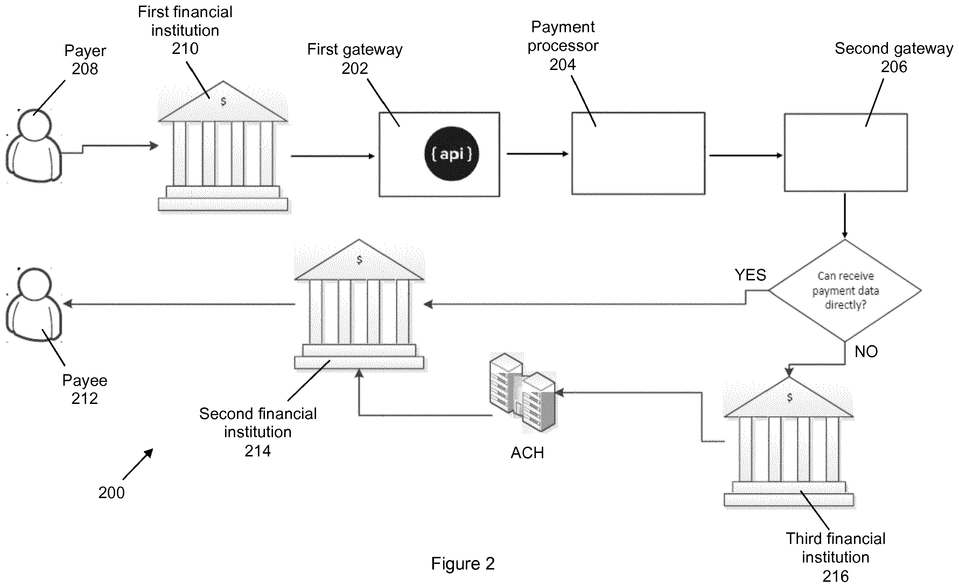

Figure 2 shows a schematic diagram illustrating a system 200 for processing a cross-border payment according to an example embodiment. The system 200 is consistent with the method as described above with respect to Figure 1 and includes a first gateway 202, a payment processor 204 and a second gateway 206. The payment processor 204 is connected to each of the first gateway 202 and second gateway 206 by a network, such as an Intranet or the Internet.

As described in further detail below, a sender or payer 208 is located in a first country and has a banking relationship with a first financial institution 210 also located in the first country. A receiver or payee 212 is located in a second country and has a banking relationship with a second financial institution 214 also located in the second country. The payer 208 wishes to make a payment to the payee 212. The system 200 helps to arrange for the payment by processing the payment data between the first financial institution 210 and second financial institution 214.

In this example, the payer 208 initiates a payment with the first financial institution 210 which can handle inter-bank payments, such as those processed by an automated clearing house (ACH). The payment can be initiated, for example, via a counter, a terminal, a website, an application, by providing the relevant payment data. Inbound payment data from the first financial institution 210 are received by the first gateway 202. Non-limiting examples of inbound payment data include debiting/remitting account details, crediting account details, value of payment, comment/note to payee. Typically, the inbound payment data is organized in a first message format, such as a format compliant with ISO 20022. For example, the inbound payment data may include a pacs.008 message typically used for interbank communication. In other words, the system 200 allows the first financial institution 210 to operate in substantially the same manner as it would do in an inter-bank payment.

Figure 3 shows an abbreviated pacs.008 message with some of the data fields having been omitted. In this example, details of the debiting account and crediting account are shown by numerals 302 and 304 respectively. Details of each type of account may include the account number, name of account holder, address of account holder, etc. It will be appreciated by persons skilled in the art a complete pacs.008 message includes other details as may be prescribed by industry practice or government regulations.

The first gateway 202 then generates a payment request based on the inbound payment data to be sent to the payment processor 204 for processing. The payment processor 204 operates as part of a payment facilitator or card network (e.g. Mastercard®) that processes payment card-based transactions. Typically, the payment processor 204 is configured to handle payment requests that are organized in a second message format, such as one compliant with ISO 8583. Accordingly, the first gateway 202 generates the payment request such that the payment request is in the second message format.

In one implementation, the first gateway 202 includes an application programming interface (API), such as the Mastercard® MoneySend API, that works with a data interchange format, e.g. JavaScript Object Notation (JSON). The first gateway 202 first converts the inbound payment data from the first message format to the data interchange format, e.g. JavaScript Object Notation (JSON), accessible by the API. For example, if the pacs.008 message as described above is in the extensible markup language (XML), an XML-to-JSON converter may be used. The API then identifies converted data in predetermined fields to generate the payment request in the second message format, and sends the payment request to the payment processor 204.

For example, the first gateway 202 may convert an account number associated with the first financial institution 208 to a sender (i.e. funding) card account number, and convert an account number associated with the second financial institution 214 to a receiver (i.e. receiving) card account number as part of the conversion of the inbound payment data from the first message format to the data interchange format. The card account numbers may have 16 digits as normally associated with payment cards, of which the first 6 digits comprise a virtual Bank Identification Number (BIN) assigned to the conversion and the remaining 10 digits are uniquely generated for every payment request.

Figure 4 shows an example of selected data in the JSON format that can be accessed by the MoneySend API to generate the payment request. As described above, the API identifies converted data in selected fields in generating the payment request. In one implementation, the API can look up for specific data labels of the data fields in the JSON format to extract the information relevant to the payment request. For example, in Figure 4, the API can identify the funding card account number 402, receiving card account number 404, receiving amount 406, receiver address 408, etc. The funding card account number 402 and receiving card account number 404 in Figure 4 are both in the 16-digit as described above.

Figure 5 shows an example message associated with the payment request in the second message format. For ISO 8583, the payment request may be in the form of a message having Message Type Indicator (MTI) of 0200. A 0200 message is normally used to request for funds, typically from a point-of-sale (POS) device. In this example, hexadecimal characters 502 (i.e. 0-9 and A-F) are used to represent the bitmap of the message. The payment processor 204 is configured to handle this type of message and can interpret the information in the bitmap accordingly.

Referring back to Figure 2, the payment processor 204 processes the payment request by approving or declining the payment request. In a preferred implementation, the payment processor 204 is a Single Message System that processes the request according to routines prescribed by single message processing. If the payment request is approved, the payment processor 204 notifies the second gateway 206. The second gateway 206 generates outbound payment data such that the outbound payment data is in the first message format and sends the outbound payment data to the second financial institution 214.

The sending of outbound payment data to the second financial institution 214 may be performed depending on whether second financial institution 214 is configured to receive the outbound payment data directly, for example, whether the second financial institution 214 has an existing arrangement with a payment card network such as Mastercard®. If the second financial institution 214 can receive the outbound payment data directly, the second gateway 206 sends the outbound payment data to the second financial institution 214. On the other hand, if the second financial institution 214 cannot receive the outbound payment data directly, the second gateway 206 sends the outbound payment data to a third financial institution 216 in the second country, also known as a settlement agent, for onward settlement with the second financial institution 214. For example, the third financial institution 216 can follow up with a domestic ACH-based transaction with the second financial institution 214.

After the second financial institution 214 receives the payment, e.g. the funds are made available, the second financial institution 214 can provide confirmation to the first financial institution 208 via the system 200. According to various embodiments, the second gateway 206 receives payment confirmation data in the first message format from the second financial institution 214, converts the payment confirmation data from the first message format to the second message format, and transmits the payment confirmation data in the second message format to the first gateway 202 via the payment processor 204. The payment confirmation data in the first message format may be in the form of a pacs.002 message normally associated with a payment status report according to ISO 20022, while the payment confirmation data in the second message format may be in the form of a 0210 normally used as issuer response to request for funds according to ISO 8583. The first gateway 202 converts the received payment confirmation data from the second message format to the first message format, and transmits the payment confirmation data in the first message format to the first financial institution 208. The conversion by the first gateway 202 may involve the use of the API in the reverse order as described above with reference to Figures 3 and 4.

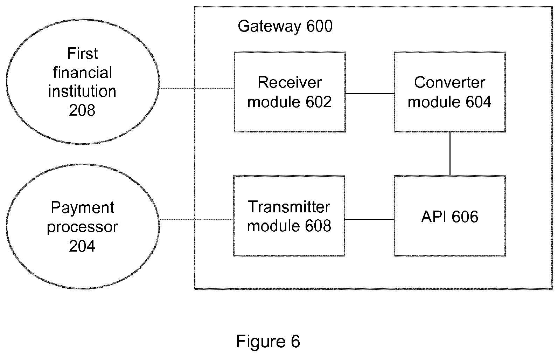

Figure 6 shows a schematic diagram of a gateway 600 (such as the first gateway 202 or second gateway 206) suitable for use in the system 200 of Figure 2 according to an example embodiment. In this example, the gateway 600 is described with reference to use as the first gateway 202 in communication with the first financial institution 208 (Figure 2) and payment processor 204 (Figure 2).

The gateway 600 includes a receiver module 602, a converter module 604, an API 606 and a transmitter module 608. The receiver module 602 receives inbound payment data in the first message format from the first financial institution 202, e.g. over a network such as the Internet. The converter module 604 converts the inbound payment data from the first message format to a data interchange format. For example, if the first message format is XML and the data interchange format is JSON, the converter module includes an XML-to-JSON converter. The API 606, e.g. Mastercard® MoneySend API, accesses the converted data in the JSON format and identifies data in predetermined fields to generate the payment request in the second message format. The transmitter module 608 transmits the payment request to the payment processor 204 for processing.

The receiver module 602 and transmitter 608 may be implemented as a single transceiver unit. Further, as described above, the gateway 600 can be configured to be used as the second gateway 206, in which case the receiver module 602 receives information from the payment processor 204 and the transmitter module 608 sends information to the second financial institution 214 (Figure 2).

It would be appreciated that while the first gateway 202 and second gateway 206 are described separately, they can be arranged to be separate modules within the same system. For example, the first gateway 202 and second gateway 206 may be implemented as separate interfaces with the respective financial institutions but controlled by a central server. Also, the first gateway 202 and second gateway 206 can be similarly configured such that if a cross-border payment is to be made in the opposite direction as described above with reference to Figure 2, the payment can be similarly performed. For example, if the payee realizes that there is an overpayment, a refund can be made using the present method and system.

In an alternate embodiment, the first gateway 202, payment processor 204 and second gateway 206 may be integrated into a single system. Such a system may include, among other things, a processor and a memory unit communicatively coupled to the processor. The memory unit stores inbound payment data received from a first financial institution located in a first country. The inbound payment data is in a first message format. The processor generates a payment request based on the inbound payment data such that the payment request is in the second message format and processes the generated payment request. Processing comprises approving or declining the payment request. If the payment request is approved, the processor generates outbound payment data such that the outbound payment data is in the first message format and sends the outbound payment data to a second financial institution located in a second country.

As described, the methods and systems according to the example embodiments can leverage on the large number of existing relationships between financial institutions and a payment card network such as Mastercard® to enable cross-border payments to be performed more quickly and cost-effectively. For example, the involvement of intermediaries is significantly reduced.

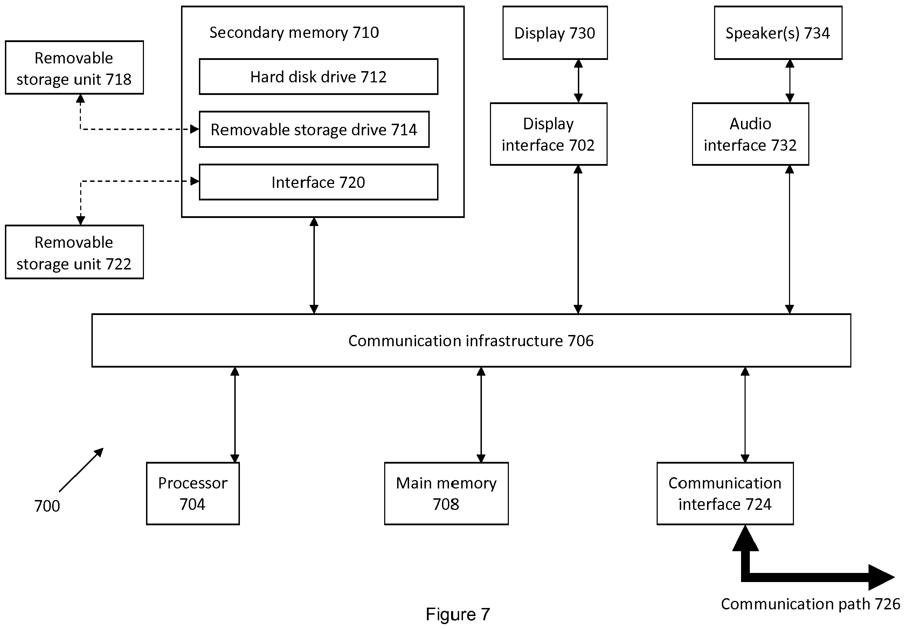

Figure 7 depicts an exemplary computing device 700, hereinafter interchangeably referred to as a computer system 700, where one or more such computing devices 700 may be used for the gateway 600, first gateway 202, payment processor 204 or the second gateway 206. The following description of the computing device 700 is provided by way of example only and is not intended to be limiting.

As shown in Figure 7, the example computing device 700 includes a processor 704 for executing software routines. Although a single processor is shown for the sake of clarity, the computing device 700 may also include a multi-processor system. The processor 704 is connected to a communication infrastructure 706 for communication with other components of the computing device 700. The communication infrastructure 706 may include, for example, a communications bus, cross-bar, or network.

The computing device 700 further includes a main memory 708, such as a random access memory (RAM), and a secondary memory 710. The secondary memory 710 may include, for example, a hard disk drive 712 and/or a removable storage drive 714, which may include a floppy disk drive, a magnetic tape drive, an optical disk drive, or the like. The removable storage drive 714 reads from and/or writes to a removable storage unit 718 in a well-known manner. The removable storage unit 718 may include a floppy disk, magnetic tape, optical disk, or the like, which is read by and written to by removable storage drive 714. As will be appreciated by persons skilled in the relevant art(s), the removable storage unit 718 includes a computer readable storage medium having stored therein computer executable program code instructions and/or data.

In an alternative implementation, the secondary memory 710 may additionally or alternatively include other similar means for allowing computer programs or other instructions to be loaded into the computing device 700. Such means can include, for example, a removable storage unit 722 and an interface 720. Examples of a removable storage unit 722 and interface 720 include a program cartridge and cartridge interface (such as that found in video game console devices), a removable memory chip (such as an EPROM or PROM) and associated socket, and other removable storage units 722 and interfaces 720 which allow software and data to be transferred from the removable storage unit 722 to the computer system 700.

The computing device 700 also includes at least one communication interface 724. The communication interface 724 allows software and data to be transferred between computing device 700 and external devices via a communication path 726. In various embodiments of the inventions, the communication interface 724 permits data to be transferred between the computing device 700 and a data communication network, such as a public data or private data communication network. The communication interface 724 may be used to exchange data between different computing devices 700 which such computing devices 700 form part an interconnected computer network. Examples of a communication interface 724 can include a modem, a network interface (such as an Ethernet card), a communication port, an antenna with associated circuitry and the like. The communication interface 724 may be wired or may be wireless. Software and data transferred via the communication interface 724 are in the form of signals which can be electronic, electromagnetic, optical or other signals capable of being received by communication interface 724. These signals are provided to the communication interface via the communication path 726.

As shown in Figure 7, the computing device 700 further includes a display interface 702 which performs operations for rendering images to an associated display 730 and an audio interface 732 for performing operations for playing audio content via associated speaker(s) 734.

As used herein, the term "computer program product" may refer, in part, to removable storage unit 718, removable storage unit 722, a hard disk installed in hard disk drive 712, or a carrier wave carrying software over communication path 726 (wireless link or cable) to communication interface 724. Computer readable storage media refers to any non-transitory tangible storage medium that provides recorded instructions and/or data to the computing device 700 for execution and/or processing. Examples of such storage media include floppy disks, magnetic tape, CD-ROM, DVD, Blu-ray™ Disc, a hard disk drive, a ROM or integrated circuit, USB memory, a magneto-optical disk, or a computer readable card such as a PCMCIA card and the like, whether or not such devices are internal or external of the computing device 700. Examples of transitory or non-tangible computer readable transmission media that may also participate in the provision of software, application programs, instructions and/or data to the computing device 700 include radio or infra-red transmission channels as well as a network connection to another computer or networked device, and the Internet or Intranets including e-mail transmissions and information recorded on Websites and the like.

The computer programs (also called computer program code) are stored in main memory 708 and/or secondary memory 710. Computer programs can also be received via the communication interface 724. Such computer programs, when executed, enable the computing device 700 to perform one or more features of embodiments discussed herein. In various embodiments, the computer programs, when executed, enable the processor 704 to perform features of the above-described embodiments. Accordingly, such computer programs represent controllers of the computer system 700.

Software may be stored in a computer program product and loaded into the computing device 700 using the removable storage drive 714, the hard disk drive 712, or the interface 720. Alternatively, the computer program product may be downloaded to the computer system 700 over the communications path 726. The software, when executed by the processor 704, causes the computing device 700 to perform functions of embodiments described herein.

It is to be understood that the embodiment of Figure 7 is presented merely by way of example. Therefore, in some embodiments one or more features of the computing device 700 may be omitted. Also, in some embodiments, one or more features of the computing device 700 may be combined together. Additionally, in some embodiments, one or more features of the computing device 700 may be split into one or more component parts.

It will be appreciated that the elements illustrated in Figure 7 function to provide means for performing the various functions and operations of the servers as described in the above embodiments.

In an implementation, a server may be generally described as a physical device comprising at least one processor and at least one memory including computer program code. The at least one memory and the computer program code are configured to, with the at least one processor, cause the physical device to perform the requisite operations.

Some portions of the description herein are explicitly or implicitly presented in terms of algorithms and functional or symbolic representations of operations on data within a computer memory. These algorithmic descriptions and functional or symbolic representations are the means used by those skilled in the data processing arts to convey most effectively the substance of their work to others skilled in the art. An algorithm is here, and generally, conceived to be a self-consistent sequence of steps leading to a desired result. The steps are those requiring physical manipulations of physical quantities, such as electrical, magnetic or optical signals capable of being stored, transferred, combined, compared, and otherwise manipulated.

Unless specifically stated otherwise, and as apparent from the following, it will be appreciated that throughout the present specification, discussions utilizing terms such as "scanning", "calculating", "determining", "replacing", "generating", "initializing", "outputting", or the like, refer to the action and processes of a computer system, or similar electronic device, that manipulates and transforms data represented as physical quantities within the computer system into other data similarly represented as physical quantities within the computer system or other information storage, transmission or display devices.

The present specification also discloses apparatus for performing the operations of the methods. Such apparatus may be specially constructed for the required purposes, or may comprise a general purpose computer or other device selectively activated or reconfigured by a computer program stored in the computer. The algorithms and displays presented herein are not inherently related to any particular computer or other apparatus. Various general purpose machines may be used with programs in accordance with the teachings herein. Alternatively, the construction of more specialized apparatus to perform the required method steps may be appropriate. The structure of a computer suitable for executing the various methods / processes described herein will appear from the description herein.

In addition, the present specification also implicitly discloses a computer program, in that it would be apparent to the person skilled in the art that the individual steps of the method described herein may be put into effect by computer code. The computer program is not intended to be limited to any particular programming language and implementation thereof. It will be appreciated that a variety of programming languages and coding thereof may be used to implement the teachings of the disclosure contained herein. Moreover, the computer program is not intended to be limited to any particular control flow. There are many other variants of the computer program, which can use different control flows without departing from the spirit or scope of the invention.

Furthermore, one or more of the steps of the computer program may be performed in parallel rather than sequentially. Such a computer program may be stored on any computer readable medium. The computer readable medium may include storage devices such as magnetic or optical disks, memory chips, or other storage devices suitable for interfacing with a computer. The computer readable medium may also include a hard-wired medium such as exemplified in the Internet system, or wireless medium such as exemplified in the GSM, GPRS, 3G or 4G mobile telephone systems, as well as other wireless systems such as Bluetooth, ZigBee, Wi-Fi. The computer program when loaded and executed on such a general-purpose computer effectively results in an apparatus that implements the steps of the preferred method.

The present invention may also be implemented as hardware modules. More particularly, in the hardware sense, a module is a functional hardware unit designed for use with other components or modules. For example, a module may be implemented using discrete electronic components, or it can form a portion of an entire electronic circuit such as an Application Specific Integrated Circuit (ASIC) or Field Programmable Gate Array (FPGA). Numerous other possibilities exist. Those skilled in the art will appreciate that the system can also be implemented as a combination of hardware and software modules.

According to various embodiments, a "circuit" may be understood as any kind of a logic implementing entity, which may be special purpose circuitry or a processor executing software stored in a memory, firmware, or any combination thereof. Thus, in an embodiment, a "circuit" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "circuit" may also be a processor executing software, e.g. any kind of computer program, e.g. a computer program using a virtual machine code such as e.g. Java. Any other kind of implementation of the respective functions which may be described in more detail herein may also be understood as a "circuit" in accordance with an alternative embodiment.

It will be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

## Claims

1. A method for processing a cross-border payment, the method comprising:
receiving inbound payment data from a first financial institution located in a first country, wherein the inbound payment data is in a first message format;
generating a payment request based on the inbound payment data such that the payment request is in the second message format;
processing the generated payment request, wherein processing comprises approving or declining the payment request;
if the payment request is approved, generating outbound payment data such that the outbound payment data is in the first message format; and
sending the outbound payment data to a second financial institution located in a second country.

2. The method as claimed in claim 1, wherein generating the payment request from the inbound payment data comprises:
converting the inbound payment data from the first message format to a data interchange format accessible by an application programming interface (API); and
identifying, by the API, data in predetermined fields to generate the payment request in the second message format.

3. The method as claimed in claim 2, wherein converting the inbound payment data from the first message format to the data interchange format further comprises converting an account number associated with the first financial institution to a sender card account number, and converting an account number associated with the second financial institution to receiver card account number.

4. The method as claimed in claim 2, further comprising:
receiving payment confirmation data from the second financial institution, wherein the payment confirmation data is in the first message format; and
transmitting the payment confirmation data to the first financial institution, wherein transmitting comprises:
converting the payment confirmation data from the first message format to the second message format for receipt by the API; and
converting the payment confirmation data from the second message format to the first message format for transmission to the first financial institution.

5. The method as claimed in any one of the preceding claims, wherein processing the payment request comprises Single Message processing.

6. The method as claimed in any one of the preceding claims, wherein sending the outbound payment data to the second financial institution comprises:
determining whether the second financial institution is configured to receive the outbound payment data directly; and
if the second financial institution can receive the outbound payment data directly, sending the outbound payment data to the second financial institution.

7. The method as claimed in any one of claims 1 to 5, wherein sending the outbound payment data to the second financial institution comprises:
determining whether the second financial institution is configured to receive the outbound payment data directly; and
if the second financial institution cannot receive the outbound payment data directly, sending the outbound payment data to a third financial institution located in the second country for onward settlement with the second financial institution.

8. The method as claimed in any one of the preceding claims, wherein the first message format is compliant with ISO 20022, and wherein the second message format is compliant with ISO 8583.

9. A system for processing a cross-border payment, the system comprising:
a first gateway configured to receive inbound payment data in a first message format from a first financial institution located in a first country and to generate a payment request based on the inbound payment data such that the payment request is in the second message format;
a payment processor connected to the first gateway over a network and configured to process the generated payment request, wherein processing comprises approving or declining the payment request; and
a second gateway connected to the payment processor over the network, wherein the second gateway is configured to, if the payment request is approved, generate outbound payment data such that the outbound payment data is in the first message format and send the outbound payment data to a second financial institution located in a second country.

10. The system as claimed in claim 9, wherein the first gateway comprises an application programming interface (API), and wherein:
the first gateway is configured to convert the inbound payment data from the first message format to a data interchange format accessible by the API; and
the API is configured to identify data in predetermined fields to generate the payment request in the second message format.

11. The system as claimed in claim 10, wherein the first gateway is further configured to convert an account number associated with the first financial institution to a sender card account number, and an account number associated with the second financial institution to receiver card account number, for converting the inbound payment data from the first message format to the data interchange format.

12. The system as claimed in claim 10, wherein the second gateway is further configured to:
receive payment confirmation data in the first message format from the second financial institution;
convert the payment confirmation data from the first message format to the second message format; and
transmit the payment confirmation data in the second message format to the first gateway via the payment processor.

13. The system as claimed in claim 12, wherein the first gateway is further configured to:
convert the received payment confirmation data from the second message format to the first message format; and
transmit the payment confirmation data in the first message format to the first financial institution.

14. The system as claimed in any one of claims 9 to 13, wherein the payment processor comprises a Single Message System.

15. The system as claimed in any one of claims 9 to 14, wherein the second gateway is further configured to determine whether the second financial institution is configured to receive the outbound payment data directly, and, if the second financial institution can receive the outbound payment data directly, send the outbound payment data to the second financial institution comprises.

16. The system as claimed in any one of claims 9 to 14, wherein the second gateway is further configured to determine whether the second financial institution is configured to receive the outbound payment data directly, and, if the second financial institution cannot receive the outbound payment data directly, send the outbound payment data to a third financial institution located in the second country for onward settlement with the second financial institution.

17. The system as claimed in any one of claims 9 to 16, wherein the first message format is compliant with ISO 20022, and wherein the second message format is compliant with ISO 8583.

18. The system as claimed in any one of claim 9 to 17, wherein the first gateway and second gateway are arranged in a single system.

19. A system for processing a cross-border payment, the system comprising:
a processor; and
a memory unit communicatively coupled to the processor;
wherein the memory unit is configured to store inbound payment data received from a first financial institution located in a first country, wherein the inbound payment data is in a first message format; and
wherein the processor is configured to:
generate a payment request based on the inbound payment data such that the payment request is in the second message format;
process the generated payment request, wherein processing comprises approving or declining the payment request;
if the payment request is approved, generate outbound payment data such that the outbound payment data is in the first message format; and
send the outbound payment data to a second financial institution located in a second country.
